(19) Europäisches Patentamt / European Patent Office / Office européen des brevets

(11) **EP 4 607 474 B1**

(12) **EUROPEAN PATENT SPECIFICATION**


(45) Date of publication and mention of the grant of the patent:
**12.08.2026 Bulletin 2026/33**

(21) Application number: **24159455.5**

(22) Date of filing: **23.02.2024**

(51) International Patent Classification (IPC):
***G06V 10/764*** (2022.01) ***G06V 10/774*** (2022.01)
***G06V 10/82*** (2022.01) ***G06V 10/84*** (2022.01)
***G06V 20/64*** (2022.01) ***G06V 20/70*** (2022.01)

(52) Cooperative Patent Classification (CPC):
**G06V 20/70; G06V 10/764; G06V 10/774; G06V 10/7753; G06V 10/82; G06V 10/84; G06V 20/64**


(54) **METHODS FOR SEGMENTATION TASKS**

VERFAHREN ZUR SEGMENTIERUNG VON AUFGABEN

PROCÉDÉS DE TÂCHES DE SEGMENTATION


(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**27.08.2025 Bulletin 2025/35**



(73) Proprietors:
- **TOYOTA JIDOSHA KABUSHIKI KAISHA**
  **Toyota-shi, Aichi-ken, 471-8571 (JP)**
- **ETH Zurich**
  **8092 Zürich (CH)**

(72) Inventors:
- **ABBELOOS, Wim**
  **1140 BRUSSELS (BE)**
- **UNAL, Ozan**
  **8092 ZURICH (CH)**
- **SAKARIDIS, Christos**
  **8092 ZURICH (CH)**
- **VAN GOOL, Luc**
  **8092 ZURICH (CH)**

(74) Representative: **Cabinet Beau de Loménie**
**103, rue de Grenelle**
**75340 Paris Cedex 07 (FR)**



(56) References cited:
- **YANG YUWEI ET AL: "Geometry and Uncertainty-Aware 3D Point Cloud Class-Incremental Semantic Segmentation", 2023 IEEE/CVF CONFERENCE ON COMPUTER VISION AND PATTERN RECOGNITION (CVPR), IEEE, 17 June 2023 (2023-06-17), pages 21759 - 21768, XP034400998, DOI: 10.1109/CVPR52729.2023.02084**
- **UNAL OZAN ET AL: "Scribble-Supervised LiDAR Semantic Segmentation", 2022 IEEE/CVF CONFERENCE ON COMPUTER VISION AND PATTERN RECOGNITION (CVPR), IEEE, 18 June 2022 (2022-06-18), pages 2687 - 2697, XP034193020, DOI: 10.1109/CVPR52688.2022.00272**
- **YARIN GAL ET AL: "Dropout as a Bayesian Approximation: Representing Model Uncertainty in Deep Learning", 4 October 2016 (2016-10-04), XP055467519, Retrieved from the Internet <URL:https://arxiv.org/pdf/1506.02142.pdf> [retrieved on 20180416]**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



EP 4 607 474 B1

## Description

1. Field of the Invention

The invention relates to the field of segmentation tasks. In particular, the invention relates to methods for training 3D segmentation models.

2. Description of Related Art

3D Segmentation tasks are important in many applications based on dense processing and reasoning in 3D environments. Although machine-learning based segmentation models have become a powerful tool to perform such tasks, they generally require being trained using extensive labelled datasets that cannot be easily obtained.

In order to address such limitations, semi-supervised training methods have been proposed to train the models on both labeled datasets and unlabeled datasets.

For example, self-training methods proceed by first training a segmentation model on a labelled dataset, and adjusting the segmentation model by using its own prediction (pseudo-labels) when applied to unlabeled datasets (see [REF 1]-[REF 3]). However, such methods of the prior art suffer from confirmation bias which limits their performance (see [REF 4]).

Thresholding schemes, wherein some pseudo-labels are filtered out based on a confidence level, have been proposed to overcome the issue aforementioned, however they generally rely on uncertainty estimators using a softmax function that inherently lack reliability (see [REF 5]). There is thus a need for solving problems of the prior art.

The following references disclose various methods relating to segmentation tasks.


[REF 1] CHENG, Mingmei, HUI, Le, XIE, Jin, et al. Sspc-net: Semi-supervised semantic 3d point cloud segmentation network. In : Proceedings of the AAAI conference on artificial intelligence. 2021. p. 1140-1147.

[REF 2] JIANG, Li, SHI, Shaoshuai, TIAN, Zhuotao, et al. Guided point contrastive learning for semi-supervised point cloud semantic segmentation. In : Proceedings of the IEEE/CVF international conference on computer vision. 2021. p. 6423-6432.

[REF 3] KONG, Lingdong, REN, Jiawei, PAN, Liang, et al. Lasermix for semi-supervised lidar semantic segmentation. In : Proceedings of the IEEE/CVF Conference on Computer Vision and Pattern Recognition. 2023. p. 21705-21715.

[REF 4] ZOU, Yang, YU, Zhiding, KUMAR, B. V. K., et al. Unsupervised domain adaptation for semantic segmentation via class-balanced self-training. In : Proceedings of the European conference on computer vision (ECCV). 2018. p. 289-305.

[REF 5] GUO, Chuan, PLEISS, Geoff, SUN, Yu, et al. On calibration of modern neural networks. In : International conference on machine learning. PMLR, 2017. p. 1321-1330.

[REF 6] BEHLEY, Jens, GARBADE, Martin, MILIOTO, Andres, et al. Semantickitti: A dataset for semantic scene understanding of lidar sequences. In : Proceedings of the IEEE/CVF international conference on computer vision. 2019. p. 9297-9307.

[REF 7] UNAL, Ozan, DAI, Dengxin, et VAN GOOL, Luc. Scribble-supervised lidar semantic segmentation. In : Proceedings of the IEEE/CVF Conference on Computer Vision and Pattern Recognition. 2022. p. 2697-2707.

[REF 8] ZHU, Xinge, ZHOU, Hui, WANG, Tai, et al. Cylindrical and asymmetrical 3d convolution networks for lidar segmentation. In : Proceedings of the IEEE/CVF conference on computer vision and pattern recognition. 2021. p. 9939-9948.

[REF 9] UNAL, Ozan, DAI, Dengxin, UNAL, Ali Tamer, et al. Discwise active learning for lidar semantic segmentation. IEEE Robotics and Automation Letters, 2023.

[REF 10] CHEN, Xiaokang, YUAN, Yuhui, ZENG, Gang, et al. Semi-supervised semantic segmentation with cross pseudo supervision. In : Proceedings of the IEEE/CVF Conference on Computer Vision and Pattern Recognition. 2021. p. 2613-2622.

[REF 11] DAI, Angela, CHANG, Angel X., SAVVA, Manolis, et al. Scannet: Richly-annotated 3d reconstructions of indoor scenes. In : Proceedings of the IEEE conference on computer vision and pattern recognition. 2017. p. 5828-5839.

[REF 12] CHU, Ruihang, YE, Xiaoqing, LIU, Zhengzhe, et al. Twist: Two-way inter-label self-training for semi-supervised 3d instance segmentation. In : Proceedings of the IEEE/CVF conference on computer vision and pattern recognition. 2022. p. 1100-1109.

[REF 13] ZHANG, Zaiwei, GIRDHAR, Rohit, JOULIN, Armand, et al. Self-supervised pretraining of 3d features on any point-cloud. In : Proceedings of the IEEE/CVF International Conference on Computer Vision. 2021. p. 10252-10263.

[REF 14] HOU, Ji, GRAHAM, Benjamin, NIEßNER, Matthias, et al. Exploring data-efficient 3d scene understanding with contrastive scene contexts. In : Proceedings of the IEEE/CVF Conference on Computer Vision and Pattern

Recognition. 2021. p. 15587-15597.
[REF 15] LIU, Kangcheng, ZHAO, Yuzhi, NIE, Qiang, et al. Weakly Supervised 3D Scene Segmentation with Region-Level Boundary Awareness and Instance Discrimination. In : 17th European Conference on Computer Vision, ECCV 2022. Springer, Cham, 2022. p. 37-55.
[REF 16] HOULSBY, Neil, HUSZAR, Ferenc, GHAHRAMANI, Zoubin, et al. Bayesian active learning for classification and preference learning. arXiv preprint arXiv:1112.5745, 2011.
[REF 17] CHEN, Dave Zhenyu, CHANG, Angel X., et NIEßNER, Matthias. Scanrefer: 3d object localization in rgb-d scans using natural language. In : European conference on computer vision. Cham : Springer International Publishing, 2020. p. 202-221.
[REF 18] XIE, Qizhe, LUONG, Minh-Thang, HOVY, Eduard, et al. Self-training with noisy student improves imagenet classification. In : Proceedings of the IEEE/CVF conference on computer vision and pattern recognition. 2020. p. 10687-10698.
[REF 19] UNAL, Ozan, SAKARIDIS, Christos, SAHA, Suman, et al. Three Ways to Improve Verbo-visual Fusion for Dense 3D Visual Grounding. arXiv preprint arXiv:2309.04561, 2023.
YANG, Yuwei, HAYAT, Munawar, JIN, Zhao, et al. Geometry and uncertainty-aware 3d point cloud class-incremental semantic segmentation. In : Proceedings of the IEEE/CVF Conference on Computer Vision and Pattern Recognition. 2023. p. 21759-21768.
UNAL, Ozan, DAI, Dengxin, et VAN GOOL, Luc. Scribble-supervised lidar semantic segmentation. In : Proceedings of the IEEE/CVF Conference on Computer Vision and Pattern Recognition. 2022. p. 2697-2707.
GAL, Yarin et GHAHRAMANI, Zoubin. Dropout as a bayesian approximation: Representing model uncertainty in deep learning. In : international conference on machine learning. PMLR, 2016. p. 1050-1059.

SUMMARY OF THE INVENTION

According to aspects of the present disclosure, a computer-implemented method for training a segmentation model according to claim 1 is provided.

The present method is a semi-supervised training scheme using self-training. As such, the present method is used to train a model on labelled data and unlabelled data. The model is pre-trained on a labelled dataset and the pre-trained model is used to generate reliable pseudo-labels. Then, the (original untrained) model is trained on its own predictions (pseudo-labels) over a new dataset comprising elements of an unlabelled dataset and elements of the labelled dataset. The pre-training of the model is merely implemented in order to generate the pseudo-labels. Once this pre-training is done, the model is trained *ab initio* using the new dataset comprising pseudo-labelled data and labelled data. This is in contrast with methods of the prior art wherein a pre-trained model is further trained (fine-tuned) using a different dataset that the dataset used for pre-training.

With the present method, reliable pseudo-labels can be generated and advantageously used to train the segmentation model using unlabeled datasets while minimizing confirmation bias. The reliability of the pseudo-labels is ensured by filtering out unreliable pseudo-labels from the generated set of pseudo-labels. The unreliable pseudo-labels are effectively determined using a Bayesian-based uncertainty estimation over ensembles of pseudo-labels obtained via stochastic inference with the previously trained segmentation model. Therefore, with the present method it is possible to train a segmentation model with a large amount of unlabeled data while maintaining a high level of performance.

In particular, the present method achieves a better uncertainty estimation than confidence thresholding techniques of the prior art (see for example [REF 4]).

The step of generating ensembles of pseudo-labels associated to elements of an unlabeled dataset using stochastic forwards passes with the pre-trained segmentation model comprises:

- processing the elements of the unlabeled dataset using a dropout-based scheme, wherein the weights of the pre-trained segmentation model are varied at each stochastic forward pass.

Affine transformations are applied to the elements of the unlabeled dataset before processing by the pre-trained segmentation model at each stochastic forward pass.

By virtue of the use of various affine transformations to perturb the input data of the segmentation model when generating ensembles of pseudo-labels, a higher deviation amongst stochastic forward passes can be achieved. This allows for better estimation of predictive uncertainty.

According to embodiments, the affine transformations are stochastic affine transformations with a uniform probability distribution. The affine transformations may comprise: one or more rotations, one or more translations, or one or more scalings. The affine transformations may also comprise combinations of such transformations.

The use of a uniform probability distribution allows for simplifying the calculation of the uncertainty of the pseudo-labels via Bayesian statistics and thereby improving efficiency of the training.

According to embodiments, the step of estimating the uncertainty of the pseudo-labels for each element of the unlabeled dataset using Bayesian statistics over the ensembles of pseudo-labels comprises:

- calculating a conditional probability that an element of the unlabeled dataset belongs to a class defined by a predetermined label using Monte Carlo integration over the ensembles of pseudo-labels generated using the stochastic forward passes with the pre-trained segmentation model.

According to embodiments, the step of estimating the uncertainty of the pseudo-labels for each element of the unlabeled dataset using Bayesian statistics over the ensembles of pseudo-labels comprises:

- calculating Shannon entropy of the calculated conditional probability; wherein the estimated uncertainty is an entropy value and the predetermined threshold used to identify the reliable elements in the unlabelled dataset is an entropy threshold.

A thresholding of the entropy of the pseudo-labels achieves better performance than a mere thresholding of the maximum value of softmax scores of the pseudo-labels used in methods of the prior art.
According to embodiments, the method further comprises:

- minimizing a nonlinear optimization function comprising a cut-off entropy threshold representative of a level of uncertainty of the pseudo-labels.

According to embodiments, the method further comprises:

- assigning an accumulated predicted label to each reliable element of the unlabeled dataset, wherein the accumulated predicted label is calculated based on the unanimous voting principle. Therefore, the accumulated predicted label is the pseudo-label unanimously predicted by all the stochastic forwards passes. The accumulated predicted label is then used as the pseudo-label value in the step of training the segmentation using a new training dataset.

According to embodiments, the segmentation model is a 3D instance segmentation model; and the step of generating pseudo-labels associated to elements of an unlabeled dataset using stochastic forward passes with the pre-trained segmentation model comprises:

- generating an initial predicted instance mask for the elements of the unlabeled dataset with the pre-trained segmentation model;
- iteratively generating a plurality of predicted instance masks for elements of the unlabeled dataset;
- assigning each instance of the initial predicted instance mask to a best matching instance of each of the plurality of predicted instance masks, wherein the assigning is implemented using linear sum assignment; and
- for each instance of the initial predicted instance mask, calculating an aggregated instance by processing the assigned best matching instances through unanimous voting.

In this configuration, the present method allows for training a model to perform 3D instance segmentation tasks under semi-supervision. In order to perform such task, predicted instance masks obtained across various stochastic forward passes are matched to one another through a heuristic approach based on linear sum assignment. With This allows for the generation of pseudo-labels and the filtering of such pseudo-labels using multiple stochastic forward passes which, in turn, provides improvement over methods of the prior art, including semi-supervised methods requiring the use of pseudo offset vectors (see [REF 12]) or region-level contrastive loss (see [REF 15]).
According to embodiments, the linear sum assignment is implemented using a cost matrix evaluating the intersection over union between the instances of the initial predicted instance mask and instances from the predicted instance masks.
According to embodiments, the labelled dataset comprises text descriptions and the 3D instance segmentation model is used to perform a 3D visual grounding task by associating the text descriptions to the predicted instance masks; the method further comprising:

- performing a verbo-visual instance selection by assigning each of the predicted instance masks to a best matching text descriptions among the text descriptions, wherein the assigning is implemented using linear sum assignment.

In this configuration, the present method allows for training a model to perform 3D visual grounding tasks under semi-supervision. In particular, linear sum assignment matching is applied twice, first for purely 3D-based candidate

instance masks generation (instance proposals) and afterwards for the verbo-visual instance selection to match instance proposals with text descriptions.

The present disclosure is further related to a data processing system comprising means for executing the steps of the above described method. The present disclosure is further related to a computer program including instructions for executing the steps of the above described method when said program is executed by a computer. This program can use any programming language and take the form of source code, object code or a code intermediate between source code and object code, such as a partially compiled form, or any other desirable form.

The present disclosure is further related to a non-transitory recording medium readable by a computer and having recorded thereon a computer program including instructions for executing the steps of the above described method. The recording medium can be any entity or device capable of storing the program. For example, For example, the medium can include a mass memory device, such as hard drive. In general, mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; and magneto-optical disks.

Alternatively, the recording medium can be an integrated circuit in which the program is incorporated, the circuit being adapted to execute the method in question or to be used in its execution.

## BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram representing aspects of a method for training a segmentation model according to embodiments of the present disclosure;

FIG. 2 is a diagram illustrating a method to train an instance segmentation model according to embodiments of the present disclosure;

FIG. 3 is a textbox comprising a pseudo-code relative to an instance segmentation model according to embodiments of the present disclosure.

FIGS. 4-6 are tables illustrating advantages of embodiments of the method according to the present disclosure over other methods.

## DETAILED DESCRIPTION OF EMBODIMENTS

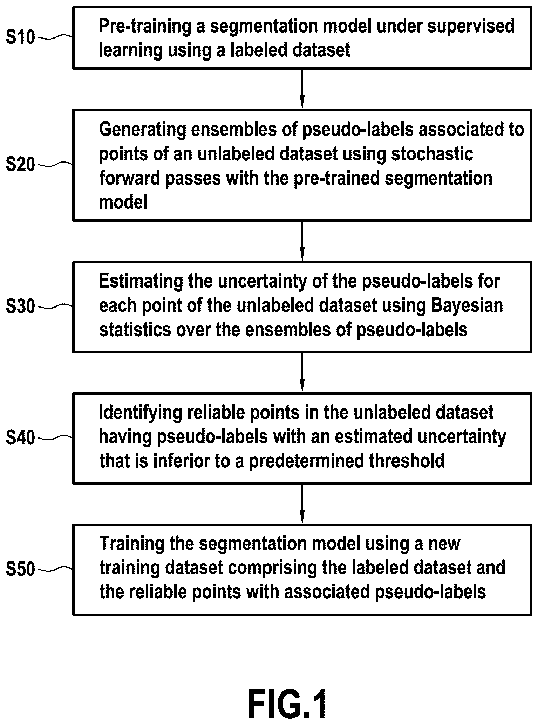

Methods for training segmentation models, which constitute exemplary embodiments of the present disclosure, are now going to be presented in relation with Figs.1-6.

The methods and systems according to the present disclosure are related to the training of machine learning-based models in order to perform several segmentation tasks. In particular, 3D semantic segmentation tasks, 3D instance segmentation tasks, and text referral-based 3D instance segmentation tasks (3D visual grounding). Such 3D segmentations tasks are aimed at classifying points of a point cloud (representing a 3D scene) into different classes.

In reference to Fig. 1, in step S10, a segmentation model defined by a plurality of weights, $\{w_k\}$, is trained over a labelled dataset, S. The labelled dataset, S, comprises a plurality of 3D point clouds (corresponding to 3D scenes) wherein each point of the point cloud is assigned with a known label. The label may be, for example, an object class to which the point belongs, such as a type of object, or a type of car. The 3D point clouds may be obtained, for example, from LIDAR measurements.

The segmentation model is trained under full supervision from the labelled dataset by minimizing the following objective function via adjustment of the model weights.

$$\min_w \sum_{i=1}^{S} L_{sem} \qquad \text{(Equation 1)}$$

In Equation 1, $L_{sem}$ is a semantic loss function based on the known labels from S and the labels predicted by the model under training. Typically, the semantic loss may be a cross-entropy term.

The method according to the present disclosure proceeds by self-training thereby leveraging scenes from an unlabeled dataset, U, in order to improve the model performance. The unlabeled dataset comprises a plurality of 3D point clouds that are not labelled.

In step S20, the scenes from the unlabeled datasets are fed to the pre-trained model in order to generate pseudo-labels for each point of the unlabeled dataset. In such step, the pre-trained model is applied to elements of the unlabeled dataset to generate pseudo-labels. Stochastic inference is used to perturb the weights of the pre-trained model and induce

variations in the predicted pseudo-labels.

In step S30, the uncertainties of the generated pseudo-labels are estimated using Bayesian statistics. In particular, a statistical averaging is applied over the ensembles of generated pseudo-labels. Further, the uncertainty is calculated in terms of a Shannon entropy.

In step S40, the entropy-based uncertainty estimation is used to filter the reliable pseudo-labels from unreliable pseudo-labels and preserve only the reliable points. The filtering is implemented by applying an entropy-based thresholding wherein only the pseudo-labels whose entropy is lower than a predetermined entropy cutoff are considered reliable. Further, a unanimous voting procedure is applied to assign each reliable element of the unlabeled dataset with a (voted) pseudo-label. This procedure implies that if all stochastic forwards passes yield the same unanimous pseudo-label for a point, such point is assigned with the unanimous pseudo-label. Conversely, if all stochastic forwards passes do not agree on the pseudo-label of a point, such point is ignored and left unlabeled (and will not be considered reliable).

In step S50, the initial model is trained using a training dataset that comprises both elements of the labelled dataset (which are inherently labelled) and elements of the unlabelled datasets whose pseudo-labels have been predicted by the pre-trained model and considered reliable enough to be used. In this step, the training is implemented *ab initio* on the original untrained model.

The Bayesian-based strategy of the present method originate from the observation that, in order to calculate an uncertainty of a predicted pseudo-label, the goal of the 3D segmentation task may be decomposed using a conditional probability over the model parameters and over augmented inputs (via affine transformations), as follows:

$$p(y = c|x, D) = \int p(y = c|a(x), w)\, p(w|D) p(a(x)|x)\, dw\, dx \qquad \text{(Equation 2)}$$

In Equation 2, D is a dataset comprising elements, X, and labels, Y; a(.) is a stochastic affine transformation, c $\in$[1,..., C] is a class. The decomposition allows for variation over the model weights, w, using a dropout scheme, as described for example in [REF 16].

Further, the decomposition also allows for variations in the input data; x through randomly applied affine transformations, a(x). The affine transformations may be rotations, translations, and/or scaling.

In embodiments, the term, $p(a(x)|x)dw$, is set as a constant thus reducing the end result to a standard averaging. This corresponds to a uniform statistical distribution of the affine transformations.

The term, $p(w|D)$, is restated via the variational approximation, q(w), and the function $KL[q(w)p(w|X,Y)]$ is minimized. The minimization objective can be approximated through Monte Carlo integration by employing variational inference via Bayesian networks, i.e., by applying stochastic forward passes with varying weights, $\{w_k\}$, and affine transformations, "a(.)", as follows.

$$p(y = c|x, D) \approx \int p(y = c|a(x), w)\, q(w)\, dwdx \approx \frac{1}{K}\sum_{k=1}^{K} p(y = c|a(x), w_k) \qquad \text{(Equation 3)}$$

In Equation 3, K is the number of weights of the model. The Equation 3 implies that the stochastic forward passes of step S20 are repeated a plurality of times while randomly varying the weights of the models and the affine transformations applied to the input points of the dataset.

The predictions obtained from all stochastic forward passes are processed to estimate the uncertainty of the pseudo-labels by calculating the Shannon entropy, as follows:

$$\mathbb{H}(y|x, D) = -\sum_{c=1}^{C} p(y = c|x, D) \log[p(y = c|x, D)] \qquad \text{(Equation 4)}$$

Further, a voted label is determined for the pseudo-labels based on the unanimous voting principle as follows,

$$\hat{y}^{*(c)} = \begin{cases} 1, if\ K = \sum_k \mathbb{1}\left[\operatorname{argmax}\left(p(y|a(x), w_k)\right) = c\right] \\ 0, \text{otherwise} \end{cases} \qquad \text{(Equation 5)}$$

In Equation 5, the term "argmax(p(y|$a$($x$),$w_k$))" is the pseudo-label prediction corresponding to the k-th stochastic forward pass. Further, $\mathbb{1}$ is denoting the indicator function, which returns a value equal to 1 if the statement in the function is true or 0 otherwise. Consequently, when summing over K runs for a given point; if the result is K, then all forward passes agree that such point is of class c (the pseudo-label is "c". Accordingly, in Equation 5, the initial pseudo label of a point is

assigned as "c" if all stochastic forward passes predict "c" for that point, otherwise the point remains unlabeled.

The self-training objective for stochastic pseudo-labelling can be expressed in terms of a nonlinear optimization task in order to ensure a high-quality pseudo-label set, as follows.

$$\min_{w,\hat{y}} \sum_{d=1}^{D}\left(L_{sem} + [\mathbb{H}(y|x,D) - \tau](\hat{y}^{*}, \hat{y})\right) \qquad \text{(Equation 6)}$$

In Equation 6, $\hat{y}$ is the (one-hot) pseudo-label vector, and $\hat{y}^*$ is the probability distribution over all classes. The hat indicates that it is not a ground truth label, but only a prediction of the model or a pseudo-label generated from the model predictions. The star indicates that the unanimous voting is used. Further, $\tau \in [0,1]$ is the cut-off entropy threshold. As disclosed in [REF 4] & [REF 7], $\tau$ may be set based on the percentage of pseudo-labels to be sampled amongst the accumulated labels.

In order to solve the nonlinear optimization task of Equation 6 and determine the reliable pseudo-labels and the values of such pseudo-labels, a solver may be used, for example the solver expressed as follows.

$$\hat{y}^{(c)} = \begin{cases} 1, if\ \mathbb{H}(y|x,D) < \tau \text{ and } c = \operatorname{argmax}(\hat{y}^{*}) \\ 0, \text{otherwise} \end{cases} \qquad \text{(Equation 7)}$$

In Equation 7, the condition $\mathbb{H}(y|x,D) < \tau$ corresponds to the entropy-based thresholding of the pseudo-labels to select reliable points. Further, the condition c = argmax(y*) corresponds to the unanimous voting procedure, wherein the reliable points are assigned with a pseudo-label (class) that is unanimously predicted over all the stochastic passes.

In Equation 7, the pseudo-labels for which $\hat{y}^{(c)} = 0$ v c are ignored during training.

Embodiments of the present method can also be used for various semi-supervised 3D prediction tasks, including especially dense predictions tasks.

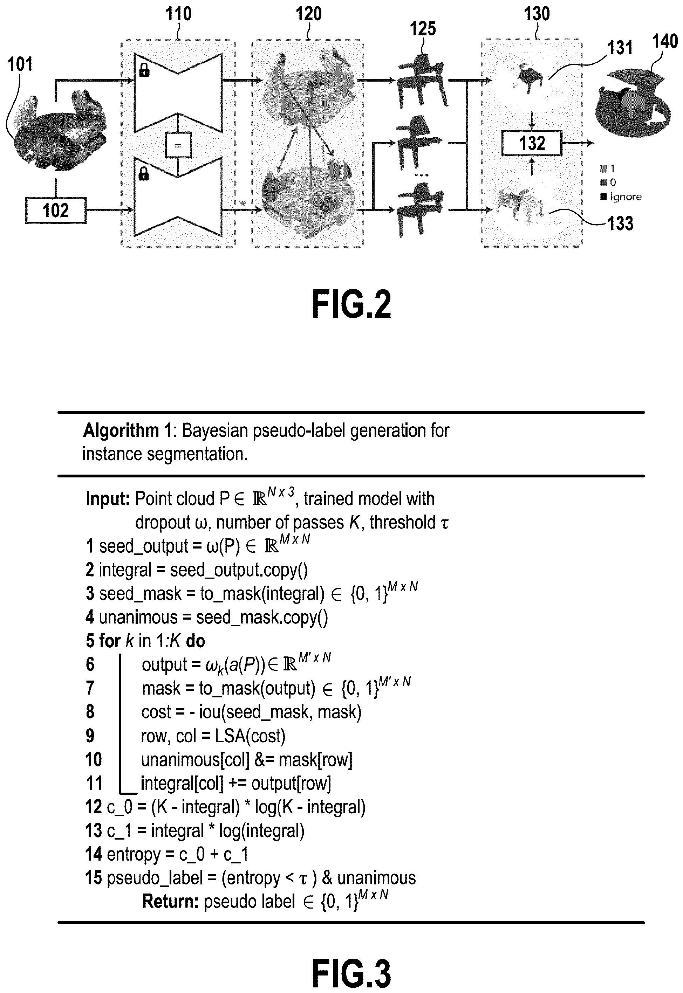

In particular, in a first variant illustrated in Fig. 2, the present method may be used for 3D instance segmentation. In such variant, multiple stochastic forwards passes are used to accumulate predicted instance masks via a proposed heuristic n-Partite matching. An example of pseudo-code algorithms for implementing such task is illustrated in FIG. 3.

First, an initial prediction (initial predicted instance mask) is generated from a scene 101 via an unaugmented (without affine transformation) forward pass 110 with a trained instance segmentation model 111, see lines 1-3 of the algorithm. The goal is to establish a seed that is likely of a higher quality with minimal perturbations of the data.

Then, predicted instance masks of each stochastic forward pass are iteratively assigned via linear sum assignment 120 in a heuristic n-partite matching scheme 120, with a cost matrix formed by the negative pairwise IoU, see lines 5-10 of the algorithm.

Finally, having matched predicted instance masks (binary instance masks) from individual stochastic forward passes, each resulting set of predicted instance masks 125 can be treated as a set of 2-class semantic segmentation outputs. Therefore, the Bayesian pseudo-labelling procedure 130 according to the present disclosure expressed in Equation 6 can be applied to the resulting set of predicted instance masks 125, see lines 11-15 of the algorithm. In particular, for each aligned (matched) object, an aggregated label is computed through unanimous voting 131 and filtered 132 based on an estimated uncertainty 133 to obtain the final pseudo-mask 140.

In Fig. 2, the star in the bottom arrow between blocks 110 and 120 indicates that the stochastic forward pass is done multiple times.

In another variant, the method according to the present disclosure can be used to train a model for 3D visual grounding tasks, in particular for referral-based 3D instance segmentation.

In order to adapt the method according to the present disclosure to visual grounding tasks, the Bayesian self-training formulation is extended to include natural language prompts as inputs. In particular, a method based on the step of a grounding-by-selection scheme is used (see [REF 17]).

In a first step, 3D instance segmentation pseudo-labels (instance candidate proposals) are generated as described in the present disclosure. In a second step, visual grounding references are adapted.

In particular, a visual grounding model (such as ConcreteNet, [REF 19]) is used to predict K instance masks in a scene, and then to predict a K dimensional vector to ground the sentence, each value giving the probability that an object is being referred to by the sentence (i.e. the object is given an ID defined by the sentence). Given that for each stochastic forward pass, the predicted object ID might change similarly to instance segmentation, the heuristic matching procedure previously described is applied to match object IDs from different scenes, see lines 5-10 of the algorithm in Fig. 3.

Results of embodiments of the present method when applied to the training of semantic segmentation models using LIDAR point cloud data from known datasets and comparison with known methods are presented in reference to

Figs. 4-6.

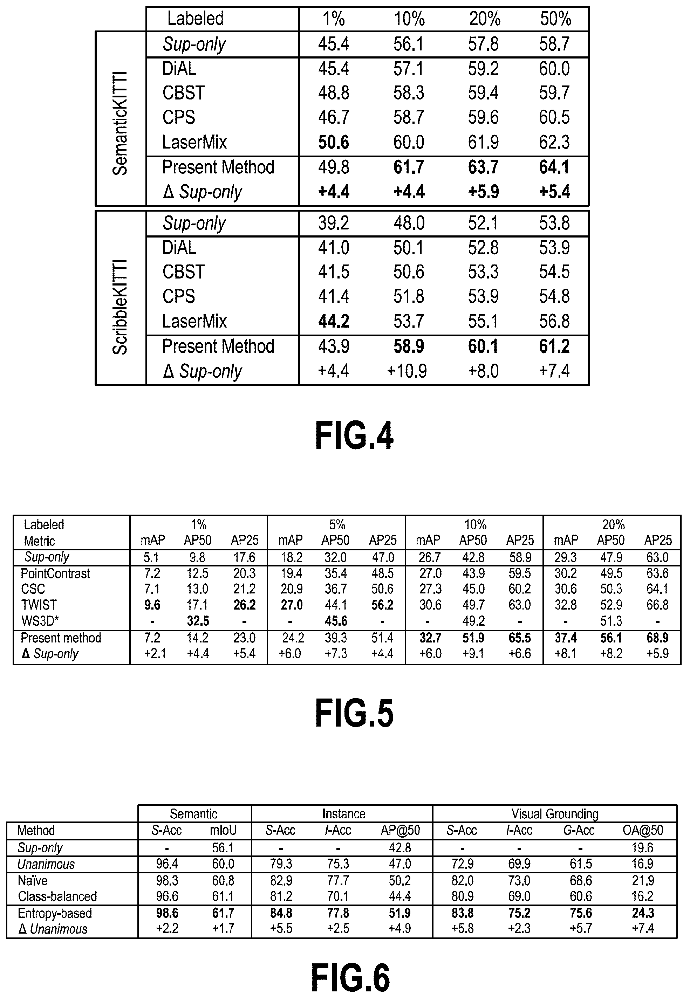

Fig. 4 shows results of the present training method and known training methods when such methods are used to perform semantic segmentation on LIDAR point cloud data from the Semantic KITTI dataset (top panel, see [REF 6]) and from the ScribbleKITTI dataset (bottom panel, see [REF 7]). For consistent comparison, all methods are evaluated using the same baseline semantic segmentation model (row denoted by "Sup-only"), which achieves 64.3% mIoU for a labelling ratio of 100% on the SemanticKITTI dataset (and 57.0% on the ScribbleKITTI dataset). In this example, the baseline model for semantic segmentation is the Cylinder3D model (see [REF 8]).

The known training methods to which the present method is compared are: DiAL (see [REF 9]), CBST (see [REF 4]), CPS (see [REF 10]), and LaserMix (see [REF 3]).

Performances of the present method are evaluated with respect to the criteria of mean Intersection-over-Union compared to fully supervised training (mIoU, expressed as a percentage). Further, the performances are evaluated for several labelling ratios (1%, 10%, 20%, 50%) of the training dataset, as indicated in the top row of the table.

In reference to Fig.4, it can be seen that the present method provides a substantial performance gain over the baseline method for every labelling ratio. In particular, the improvement in performance of the present method compared to the Cylinder3D baseline model is indicated in the last row of each panel (Δ Sup-only). Further, the present method outperforms all the other methods of the prior art for labelling percentages equal or above 10%. For a labelling ratio of 1%, the present method outperforms all but the LaserMix method, with which it is approximately on par.

**[0069]** Fig. 5 shows results of the present training method and known training methods when such methods are used to perform 3D instance segmentation on LIDAR point cloud data from the ScanNet Limited Reconstruction valid dataset (see [REF 11]). For consistent comparison, all methods (except the method marked by an asterisk "*") are evaluated by using the same baseline semantic segmentation model (row denoted by "Sup-only"). In this example, the baseline model for instance segmentation is the baseline model used in [REF 12] which uses the Sparse U-Net backbone model (see [REF 14]).

The known training methods to which the present method for instance segmentation is compared are: PointContrast (see [REF 13]), CSC (see [REF 14]), TWIST (see [REF 12]), and WS3D (see [REF 15]).

Performances of the present training method for instance segmentation are evaluated with respect to several criteria : average precision (AP), average precision at threshold of 50% (AP50) and average precision at threshold 25% (AP25), indicated in the second row of the table ("Metric"). All criteria are expressed as a percentage. Further, the performances are evaluated for several labelling ratios (1%, 5%, 10%, 20%) of the training dataset, as indicated in the top row of the table.

In reference to Fig. 5, it can be seen that the present method provides a substantial performance gain over the Sup-only baseline method for every labelling percentage. In particular, the improvement in performance of the present method compared to the baseline method is indicated in the last row of each panel ("ΔSup-only"). Further, the present method outperforms all the other methods of the prior art for labelling percentages equal or above 10%. For labelling ratios of 1% and 5%, the present method is not as effective as for higher labelling percentages but nevertheless outperforms nearly all the methods of the prior art except for the TWIST and WS3D methods. Such latter methods are however engineered solutions that are more complex and cumbersome to implement.

Fig. 6 shows an ablation study showing performance of embodiments of the present training method and known training methods when such methods are used to perform different segmentation tasks, namely 3D semantic segmentation tasks (column "Semantic"), 3D instance segmentation tasks (column "Instance"), and 3D visual grounding tasks (column "Visual Grounding"). The tasks are implemented over the respective datasets SemanticKITTI, ScanNet and ScanRefer: with a 10% labelling ratio. Specifically, the results show performance of the uncertainty thresholding via Shannon entropy according to the present disclosure (row "Entropy-based") compared to a baseline method ("Sub-only") to which is applied unanimous voting results (row "Unanimous") and to methods of the prior art such as softmax thresholding (row "Naïve", see [REF 18]) and Class-balanced thresholding (row "Class-balanced", see [REF 4]). For consistent comparison, the pseudo-label thresholding is applied after unanimous voting.

Performances of the embodiments of the present training method are evaluated with respect to several criteria: mIoU, AP@50, OA@50. Further, accuracy of the pseudo-labels are also indicated: S-Acc, I-Acc, G-Acc, in which the prefix letters indicate each pseudo-label type, "S" for semantic, "I" for Instance, and "G" for grounding.

For instance segmentation, a pseudo-mask is considered correct if an intersection with the associated ground-truth mask is identical to the former. For visual grounding, the accuracy threshold is reduced to 0.5 following the benchmark metric used.

In reference to Fig. 6, it can be seen that the entropy-based thresholding according to the present method outperforms both unanimous voting and other thresholding strategies for all tasks. In particular, the improvement in performance of the present method compared to the baseline segmentation method to which is applied unanimous voting is indicated in the last row of each panel ("ΔUnanimous").

Further, the results in Fig. 6 show that entropy-based filtering according to the present disclosure improves pseudo-label quality for each task and each type of pseudo-label.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

**1.** A computer-implemented method for training a segmentation model comprising:

- (S10) pre-training a segmentation model under supervised learning using a labeled dataset, wherein the segmentation model is a machine learning-based model trained for segmentation of 3D point clouds;
- (S20) generating ensembles of pseudo-labels associated to elements of an unlabeled dataset using stochastic forward passes with the pre-trained segmentation model;
- (S30) estimating the uncertainty of the pseudo-labels for each element of the unlabeled dataset using Bayesian statistics over the ensembles of pseudo-labels;
- (S40) identifying reliable elements in the unlabeled dataset, the reliable elements being **characterized by** having pseudo-labels with an estimated uncertainty that is inferior to a predetermined threshold; and
- (S50) training the segmentation model using a new training dataset comprising the labeled dataset and the reliable elements with associated pseudo-labels;

wherein the step of (S20) generating ensembles of pseudo-labels associated to elements of an unlabeled dataset using stochastic forwards passes with the pre-trained segmentation model comprises processing the elements of the unlabeled dataset using a dropout-based scheme, wherein the weights of the pre-trained segmentation model are varied at each stochastic forward pass; and
affine transformations are applied to the elements of the unlabeled dataset before processing by the pre-trained segmentation model at each stochastic forward pass.

**2.** The method of claims 1, wherein the affine transformations are stochastic affine transformations with a uniform probability distribution.

**3.** The method of claim 1 or 2, wherein the step of (S30) estimating the uncertainty of the pseudo-labels for each element of the unlabeled dataset using Bayesian statistics over the ensembles of pseudo-labels comprises:

- calculating a conditional probability that an element of the unlabeled dataset belongs to a class defined by a predetermined label using Monte Carlo integration over the ensembles of pseudo-labels generated using the stochastic forward passes with the pre-trained segmentation model.

**4.** The method of claim 3, wherein the step of (S30) estimating the uncertainty of the pseudo-labels for each element of the unlabeled dataset using Bayesian statistics over the ensembles of pseudo-labels comprises:

- calculating Shannon entropy of the calculated conditional probability; wherein the estimated uncertainty is an entropy and the predetermined threshold used to identify the reliable elements in the unlabeled dataset is an entropy threshold.

**5.** The method of any of claims 1 to 4, further comprising:

- minimizing a nonlinear optimization function comprising a cut-off threshold representative of a level of uncertainty of the pseudo-labels.

**6.** The method of any of claims 1 to 5, further comprising:

- assigning an accumulated predicted label to each reliable element of the unlabeled dataset, wherein the accumulated predicted label is calculated based on the unanimous voting principle.

**7.** The method of any of claims 1 to 6, wherein the segmentation model is a 3D instance segmentation model; and the step of (S20) generating pseudo-labels associated to elements of an unlabeled dataset using stochastic forward passes with the pre-trained segmentation model comprises:

- generating an initial predicted instance mask for the elements of the unlabeled dataset with the pre-trained segmentation model;
- iteratively generating a plurality of predicted instance masks for elements of the unlabeled dataset;
- assigning each instance of the initial predicted instance mask to a best matching instance of each of the plurality of predicted instance masks, wherein the assigning is implemented using linear sum assignment; and
- for each instance of the initial predicted instance, calculating an aggregated instance by processing the assigned best matching instances through unanimous voting.

**8.** The method of claim 7, wherein:

- the linear sum assignment is implemented using a cost matrix evaluating the intersection over union between the instances of the initial predicted instance mask and instances from the predicted instance masks.

**9.** The method of claim 7 or 8, wherein the labelled dataset comprises text descriptions and the 3D instance segmentation model is used to perform a 3D visual grounding task by associating the text descriptions to the predicted instance masks; the method further comprising:

- performing a verbo-visual instance selection by assigning each of the predicted instance masks to a best matching text descriptions among text descriptions, wherein the assigning is implemented using linear sum assignment.

**10.** A data processing system comprising means for executing the steps of the method according to any of claims 1 to 9.

**11.** A computer program including instructions for executing the steps of the method according to any of claims 1 to 9 when said program is executed by a computer.

**12.** A non-transitory recording medium readable by a computer and having recorded thereon a computer program including instructions for executing the steps of the method according to any of claims 1 to 9.

## Patentansprüche

**1.** Computerimplementiertes Verfahren zum Trainieren eines Segmentierungsmodells, das Folgendes umfasst:

- (S10) Vorabtrainieren eines Segmentierungsmodells unter überwachtem Lernen unter Verwendung eines beschrifteten Datensatzes, wobei das Segmentierungsmodell ein maschinenlernenbasiertes Modell ist, das für eine Segmentierung von 3D-Punktwolken trainiert ist;
- (S20) Erzeugen von Gruppen von Pseudo-Labeln, die mit Elementen eines nicht beschrifteten Datensatzes unter Verwendung von stochastischen Vorwärtsbewegungen mit dem vorab trainierten Segmentierungsmodell verknüpft sind;
- (S30) Schätzen der Ungewissheit der Pseudo-Labels für jedes Element des nicht beschrifteten Datensatzes unter Verwendung einer Bayes'schen Statistik an den Gruppen von Pseudo-Labeln;
- (S40) Identifizieren von zuverlässigen Elementen im nicht beschrifteten Datensatz, wobei die zuverlässigen Elemente **dadurch gekennzeichnet sind, dass** sie Pseudo-Label mit einer geschätzten Ungewissheit aufweisen, die unter einem vorbestimmten Schwellwert liegt; und
- (S50) Trainieren des Segmentierungsmodells unter Verwendung eines neuen Trainingsdatensatzes, der den beschrifteten Datensatz und die zuverlässigen Elemente mit zugehörigen Pseudo-Labeln umfasst;

wobei der Schritt des (S20) Erzeugens von Gruppen von Pseudo-Labeln, die mit Elementen eines nicht beschrifteten Datensatzes verknüpft sind, unter Verwendung von stochastischen Vorwärtsbewegungen mit dem vorab trainierten Segmentierungsmodell das Verarbeiten der Elemente des nicht beschrifteten Datensatzes unter Verwendung eines Dropout-basierten Schemas umfasst, wobei die Gewichtungen des vorab trainierten Segmentierungsmodells bei jeder stochastischen Vorwärtsbewegung variiert werden; und
affine Transformationen werden vor dem Verarbeiten durch das vorab trainierte Segmentierungsmodell bei jeder stochastischen Vorwärtsbewegung auf die Elemente des nicht beschrifteten Datensatzes angewandt.

**2.** Verfahren nach Anspruch 1, wobei die affinen Transformationen stochastische affine Transformationen mit einer einheitlichen Wahrscheinlichkeitsverteilung sind.

3. Verfahren nach Anspruch 1 oder 2, wobei der Schritt (S30) des Schätzens der Ungewissheit der Pseudo-Labels für jedes Element des nicht beschrifteten Datensatzes unter Verwendung einer Bayes'schen Statistik an den Gruppen von Pseudo-Labeln Folgendes umfasst:

   - Berechnen einer bedingten Wahrscheinlichkeit, dass ein Element des nicht beschrifteten Datensatzes zu einer Klasse gehört, die durch ein vorbestimmtes Label definiert wird, unter Verwendung einer Monte-Carlo-Integration an den Gruppen von Pseudo-Labeln, die unter Verwendung der stochastischen Vorwärtsbewegungen mit dem vorab trainierten Segmentierungsmodell erzeugt werden.

4. Verfahren nach Anspruch 3, wobei der Schritt (S30) des Schätzens der Ungewissheit der Pseudo-Labels für jedes Element des nicht beschrifteten Datensatzes unter Verwendung einer Bayes'schen Statistik an den Gruppen von Pseudo-Labeln Folgendes umfasst:

   - Berechnen einer Shannon-Entropie der berechneten bedingten Wahrscheinlichkeit; wobei die geschätzte Ungewissheit eine Entropie und der vorbestimmte Schwellwert, der zum Identifizieren der zuverlässigen Elemente im nicht beschrifteten Datensatz verwendet wird, ein Entropieschwellwert ist.

5. Verfahren nach einem der Ansprüche 1 bis 4, das ferner Folgendes umfasst:

   - Minimieren einer nichtlinearen Optimierungsfunktion, die einen Abschaltschwellwert umfasst, der für ein Niveau der Ungewissheit der Pseudo-Labels repräsentativ ist.

6. Verfahren nach einem der Ansprüche 1 bis 5, das ferner Folgendes umfasst:

   - Zuweisen eines akkumulierten vorhergesagten Labels zu jedem zuverlässigen Element des nicht beschrifteten Datensatzes, wobei das akkumulierte vorhergesagte Label auf Basis des einstimmigen Abstimmprinzips berechnet wird.

7. Verfahren nach einem der Ansprüche 1 bis 6, wobei das Segmentierungsmodell ein 3D-Instanzsegmentierungsmodell ist; und der Schritt des (S20) Erzeugens von Pseudo-Labeln, die mit Elementen eines nicht beschrifteten Datensatzes verknüpft sind, unter Verwendung von stochastischen Vorwärtsbewegungen mit dem vorab trainierten Segmentierungsmodell Folgendes umfasst:

   - Erzeugen einer anfänglichen vorhergesagten Instanzmaske für die Elemente des nicht beschrifteten Datensatzes mit dem vorab trainierten Segmentierungsmodell;
   - iteratives Erzeugen einer Vielzahl von vorhergesagten Instanzmasken für Elemente des nicht beschrifteten Datensatzes;
   - Zuweisen von jeder Instanz der anfänglichen vorhergesagten Instanzmaske zu einer am besten übereinstimmenden Instanz von jeder der Vielzahl von vorhergesagten Instanzmasken, wobei das Zuweisen unter Verwendung einer linearen Summenzuweisung implementiert wird; und
   - Berechnen einer aggregierten Instanz für jede Instanz der anfänglichen vorhergesagten Instanz durch Verarbeiten der zugewiesenen am besten übereinstimmenden Instanzen durch einstimmiges Abstimmen.

8. Verfahren nach Anspruch 7, wobei:

   - die lineare Summenzuweisung unter Verwendung einer Kostenmatrix implementiert wird, die die Überschneidung über eine Verbindung zwischen der Instanz der anfänglichen vorhergesagten Instanzmaske und Instanzen aus den vorhergesagten Instanzmasken beurteilt.

9. Verfahren nach Anspruch 7 oder 8, wobei die beschriftete Datenmenge Textbeschreibungen umfasst und das 3D-Instanzsegmentierungsmodell verwendet wird, um durch Verknüpfen der Textbeschreibungen mit den vorhergesagten Instanzmasken eine visuelle 3D-Grounding-Aufgabe durchzuführen; wobei das Verfahren ferner Folgendes umfasst:

   - Durchführen einer verbovisuellen Instanzauswahl durch Zuweisen von jeder der vorhergesagten Instanzmasken zu einer am besten übereinstimmenden Textbeschreibungen unter Textbeschreibungen, wobei das Zuweisen unter Verwendung einer linearen Summenzuweisung implementiert wird.

10. Datenverarbeitungssystem, das Mittel zum Ausführen der Schritte des Verfahrens nach einem der Ansprüche 1 bis 9 umfasst.

11. Computerprogramm, das Anweisungen zum Ausführen der Schritte des Verfahrens nach einem der Ansprüche 1 bis 9 umfasst, wenn das Programm von einem Computer ausgeführt wird.

12. Nichttransitorisches Aufzeichnungsmedium, das von einem Computer lesbar ist und auf dem ein Computerprogramm aufgezeichnet ist, das Anweisungen zum Ausführen der Schritte des Verfahrens nach einem der Ansprüche 1 bis 9 beinhaltet.

## Revendications

1. Procédé mis en œuvre par ordinateur pour entraîner un modèle de segmentation comprenant les étapes suivantes :

   - (S10) pré-entraînement d'un modèle de segmentation dans le cadre d'un apprentissage supervisé en utilisant un ensemble de données étiqueté, le modèle de segmentation étant un modèle basé sur l'apprentissage machine entraîné pour une segmentation de nuages de points 3D ;
   - (S20) génération d'ensembles de pseudo-étiquettes associées à des éléments d'un ensemble de données non étiqueté en utilisant des passages stochastiques en avant avec le modèle de segmentation pré-entraîné ;
   - (S30) estimation de l'incertitude des pseudo-étiquettes pour chaque élément de l'ensemble de données non étiqueté en utilisant des statistiques bayésiennes sur les ensembles de pseudo-étiquettes ;
   - (S40) identification des éléments fiables dans l'ensemble de données non étiqueté, les éléments fiables étant **caractérisés par** la présence de pseudo-étiquettes dont une incertitude estimée est inférieure à un seuil prédéterminé ; et
   - (S50) entraînement du modèle de segmentation en utilisant un nouvel ensemble de données d'entraînement comprenant l'ensemble de données étiqueté et les éléments fiables avec des pseudo-étiquettes associées ;

   dans lequel l'étape (S20) de génération d'ensembles de pseudo-étiquettes associées à des éléments d'un ensemble de données non étiqueté en utilisant des passages stochastiques en avant avec le modèle de segmentation pré-entraîné comprend le fait de traiter les éléments de l'ensemble de données non étiqueté en utilisant un schéma basé sur le décrochage, dans lequel les poids du modèle de segmentation pré-entraîné se modifient à chaque passage stochastique en avant ; et
   des transformations affines sont appliquées aux éléments de l'ensemble de données non étiqueté avant leur traitement par le modèle de segmentation pré-entraîné à chaque passage stochastique en avant.

2. Procédé selon la revendication 1, dans lequel les transformations affines sont des transformations affines stochastiques à distribution de probabilité uniforme.

3. Procédé selon la revendication 1 ou 2, dans lequel l'étape suivante (S30) d'estimation de l'incertitude des pseudo-étiquettes pour chaque élément de l'ensemble de données non étiqueté en utilisant des statistiques bayésiennes sur les ensembles de pseudo-étiquettes comprend

   - le calcul d'une probabilité conditionnelle de l'appartenance d'un élément de l'ensemble de données non étiqueté à une classe définie par une étiquette prédéterminée en utilisant une intégration de Monte Carlo sur les ensembles de pseudo-étiquettes générés en utilisant les passages stochastiques en avant avec le modèle de segmentation pré-entraîné.

4. Procédé selon la revendication 3, dans lequel l'étape (S30) d'estimation de l'incertitude des pseudo-étiquettes pour chaque élément de l'ensemble de données non étiqueté en utilisant des statistiques bayésiennes sur les ensembles de pseudo-étiquettes comprend :

   - le calcul d'une entropie de Shannon de la probabilité conditionnelle calculée ; l'incertitude estimée étant une entropie et le seuil prédéterminé utilisé pour identifier les éléments fiables dans l'ensemble de données non étiqueté étant un seuil d'entropie.

5. Procédé selon l'une des revendications 1 à 4, comprenant en outre :

   - la minimisation une fonction d'optimisation non linéaire comprenant un seuil de coupure représentatif d'un

niveau d'incertitude des pseudo-étiquettes.

6. Procédé selon l'une des revendications 1 à 5, comprenant en outre :

- l'attribution d'une étiquette prédite cumulée à chaque élément fiable de l'ensemble de données non étiqueté, l'étiquette prédite cumulée étant calculée sur la base du principe de vote unanime.

7. Procédé selon l'une des revendications 1 à 6, dans lequel le modèle de segmentation est un modèle de segmentation d'instances 3D ; et l'étape (S20) de génération de pseudo-étiquettes associées à des éléments d'un ensemble de données non étiqueté en utilisant des passages stochastiques en avant avec le modèle de segmentation pré-entraîné comprend:

- la génération d'un masque d'instance prédit initial pour les éléments de l'ensemble de données non étiqueté avec le modèle de segmentation pré-entraîné ;
- le fait de générer itérativement une pluralité de masques d'instance prédits pour les éléments de l'ensemble de données non étiqueté ;
- l'attribution de chaque instance du masque d'instance prédit initial à l'instance présentant la meilleure correspondance de chacun de la pluralité de masques d'instance prédits, l'attribution étant mise en œuvre en utilisant une attribution de somme linéaire ; et
- pour chaque instance de l'instance prédite initiale, le calcul d'une instance agrégée en traitant les instances présentant la meilleure correspondance attribuées par un vote à l'unanimité.

8. Procédé selon la revendication 7, dans lequel :

- l'attribution de somme linéaire est mise en œuvre en utilisant une matrice de coût évaluant l'intersection sur l'union entre les instances du masque d'instance prédit initial et les instances provenant des masques d'instance prédits.

9. Procédé selon la revendication 7 ou 8, dans lequel l'ensemble de données étiqueté comprend des descriptions textuelles, et le modèle de segmentation d'instances 3D est utilisé pour effectuer une tâche d'ancrage visuelle 3D en associant les descriptions textuelles aux masques d'instance prédits ; le procédé comprenant en outre :

- la réalisation d'une sélection d'instances verbo-visuelles en attribuant chacun des masques d'instance prédits aux descriptions textuelles présentant la meilleure correspondance parmi les descriptions textuelles, l'attribution étant mise en œuvre en utilisant une attribution de somme linéaire.

10. Système de traitement de données comprenant des moyens pour exécuter les étapes du procédé selon l'une des revendications 1 à 9.

11. Programme informatique comportant des instructions pour exécuter les étapes du procédé selon l'une des revendications 1 à 9 lorsque ledit programme est exécuté par un ordinateur.

12. Support d'enregistrement non transitoire lisible par un ordinateur sur lequel est enregistré un programme informatique comportant des instructions pour exécuter les étapes du procédé selon l'une des revendications 1 à 9.

S10
Pre-training a segmentation model under supervised learning using a labeled dataset
S20
Generating ensembles of pseudo-labels associated to points of an unlabeled dataset using stochastic forward passes with the pre-trained segmentation model
S30
Estimating the uncertainty of the pseudo-labels for each point of the unlabeled dataset using Bayesian statistics over the ensembles of pseudo-labels
S40
Identifying reliable points in the unlabeled dataset having pseudo-labels with an estimated uncertainty that is inferior to a predetermined threshold
S50
Training the segmentation model using a new training dataset comprising the labeled dataset and the reliable points with associated pseudo-labels

FIG.1

110
120
125
130
131
140
101
=
132
1
0
Ignore
102
*
133

**FIG.2**

---

**Algorithm 1**: Bayesian pseudo-label generation for instance segmentation.

---

**Input:** Point cloud $P \in \mathbb{R}^{N \times 3}$, trained model with dropout $\omega$, number of passes $K$, threshold $\tau$

**1** seed_output = $\omega(P) \in \mathbb{R}^{M \times N}$

**2** integral = seed_output.copy()

**3** seed_mask = to_mask(integral) $\in \{0, 1\}^{M \times N}$

**4** unanimous = seed_mask.copy()

**5** **for** $k$ in 1:$K$ **do**

**6** output = $\omega_k(a(P)) \in \mathbb{R}^{M' \times N}$

**7** mask = to_mask(output) $\in \{0, 1\}^{M' \times N}$

**8** cost = - iou(seed_mask, mask)

**9** row, col = LSA(cost)

**10** unanimous[col] &= mask[row]

**11** integral[col] += output[row]

**12** c_0 = (K - integral) * log(K - integral)

**13** c_1 = integral * log(integral)

**14** entropy = c_0 + c_1

**15** pseudo_label = (entropy < $\tau$ ) & unanimous

**Return:** pseudo label $\in \{0, 1\}^{M \times N}$

---

**FIG.3**

| | Labeled | 1% | 10% | 20% | 50% |
|---|---|---|---|---|---|
| SemanticKITTI | *Sup-only* | 45.4 | 56.1 | 57.8 | 58.7 |
| | DiAL | 45.4 | 57.1 | 59.2 | 60.0 |
| | CBST | 48.8 | 58.3 | 59.4 | 59.7 |
| | CPS | 46.7 | 58.7 | 59.6 | 60.5 |
| | LaserMix | **50.6** | 60.0 | 61.9 | 62.3 |
| | Present Method | 49.8 | **61.7** | **63.7** | **64.1** |
| | Δ *Sup-only* | **+4.4** | **+4.4** | **+5.9** | **+5.4** |
| ScribbleKITTI | *Sup-only* | 39.2 | 48.0 | 52.1 | 53.8 |
| | DiAL | 41.0 | 50.1 | 52.8 | 53.9 |
| | CBST | 41.5 | 50.6 | 53.3 | 54.5 |
| | CPS | 41.4 | 51.8 | 53.9 | 54.8 |
| | LaserMix | **44.2** | 53.7 | 55.1 | 56.8 |
| | Present Method | 43.9 | **58.9** | **60.1** | **61.2** |
| | Δ *Sup-only* | +4.4 | +10.9 | +8.0 | +7.4 |

# FIG.4

| Labeled | | 1% | | | 5% | | | 10% | | | 20% | |
|---|---|---|---|---|---|---|---|---|---|---|---|---|
| Metric | mAP | AP50 | AP25 | mAP | AP50 | AP25 | mAP | AP50 | AP25 | mAP | AP50 | AP25 |
| *Sup-only* | 5.1 | 9.8 | 17.6 | 18.2 | 32.0 | 47.0 | 26.7 | 42.8 | 58.9 | 29.3 | 47.9 | 63.0 |
| PointContrast | 7.2 | 12.5 | 20.3 | 19.4 | 35.4 | 48.5 | 27.0 | 43.9 | 59.5 | 30.2 | 49.5 | 63.6 |
| CSC | 7.1 | 13.0 | 21.2 | 20.9 | 36.7 | 50.6 | 27.3 | 45.0 | 60.2 | 30.6 | 50.3 | 64.1 |
| TWIST | **9.6** | 17.1 | **26.2** | **27.0** | 44.1 | **56.2** | 30.6 | 49.7 | 63.0 | 32.8 | 52.9 | 66.8 |
| WS3D* | - | **32.5** | - | - | **45.6** | - | - | 49.2 | - | - | 51.3 | - |
| Present method | 7.2 | 14.2 | 23.0 | 24.2 | 39.3 | 51.4 | **32.7** | **51.9** | **65.5** | **37.4** | **56.1** | **68.9** |
| **Δ** *Sup-only* | +2.1 | +4.4 | +5.4 | +6.0 | +7.3 | +4.4 | +6.0 | +9.1 | +6.6 | +8.1 | +8.2 | +5.9 |

# FIG.5

| | Semantic | | Instance | | | Visual Grounding | | | |
|---|---|---|---|---|---|---|---|---|---|
| Method | *S*-Acc | mIoU | *S*-Acc | *I*-Acc | AP@50 | *S*-Acc | *I*-Acc | *G*-Acc | OA@50 |
| *Sup-only* | - | 56.1 | - | - | 42.8 | - | - | - | 19.6 |
| *Unanimous* | 96.4 | 60.0 | 79.3 | 75.3 | 47.0 | 72.9 | 69.9 | 61.5 | 16.9 |
| Naïve | 98.3 | 60.8 | 82.9 | 77.7 | 50.2 | 82.0 | 73.0 | 68.6 | 21.9 |
| Class-balanced | 96.6 | 61.1 | 81.2 | 70.1 | 44.4 | 80.9 | 69.0 | 60.6 | 16.2 |
| Entropy-based | **98.6** | **61.7** | **84.8** | **77.8** | **51.9** | **83.8** | **75.2** | **75.6** | **24.3** |
| Δ *Unanimous* | +2.2 | +1.7 | +5.5 | +2.5 | +4.9 | +5.8 | +2.3 | +5.7 | +7.4 |

# FIG.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **CHENG ; MINGMEI ; HUI ; LE ; XIE ; JIN et al.** Sspc-net: Semi-supervised semantic 3d point cloud segmentation network. *Proceedings of the AAAI conference on artificial intelligence*, 2021, 1140-1147
- **JIANG ; LI ; SHI ; SHAOSHUAI ; TIAN ; ZHUOTAO et al.** Guided point contrastive learning for semi-supervised point cloud semantic segmentation. *Proceedings of the IEEE/CVF international conference on computer vision*, 2021, 6423-6432
- **KONG ; LINGDONG ; REN ; JIAWEI ; PAN ; LIANG et al.** Lasermix for semi-supervised lidar semantic segmentation. *Proceedings of the IEEE/CVF Conference on Computer Vision and Pattern Recognition*, 2023, 21705-21715
- **ZOU ; YANG ; YU ; ZHIDING ; KUMAR ; B. V. K. et al.** Unsupervised domain adaptation for semantic segmentation via class-balanced self-training. *Proceedings of the European conference on computer vision (ECCV)*, 2018, 289-305
- **GUO ; CHUAN ; PLEISS ; GEOFF ; SUN ; YU et al.** On calibration of modern neural networks. *International conference on machine learning. PMLR*, 2017, 1321-1330
- **BEHLEY ; JENS ; GARBADE ; MARTIN ; MILIOTO ; ANDRES et al.** Semantickitti: A dataset for semantic scene understanding of lidar sequences. *Proceedings of the IEEE/CVF international conference on computer vision.*, 2019, 9297-9307
- **UNAL ; OZAN ; DAI ; DENGXIN ; VAN GOOL, LUC**. Scribble-supervised lidar semantic segmentation. *Proceedings of the IEEE/CVF Conference on Computer Vision and Pattern Recognition*, 2022, 2697-2707
- **ZHU ; XINGE ; ZHOU ; HUI ; WANG ; TAI et al.** Cylindrical and asymmetrical 3d convolution networks for lidar segmentation. *Proceedings of the IEEE/CVF conference on computer vision and pattern recognition*, 2021, 9939-9948
- **UNAL ; OZAN ; DAI ; DENGXIN ; UNAL ; ALI TAMER et al.** Discwise active learning for lidar semantic segmentation. *IEEE Robotics and Automation Letters*, 2023
- **CHEN ; XIAOKANG ; YUAN ; YUHUI ; ZENG ; GANG et al.** Semi-supervised semantic segmentation with cross pseudo supervision. *Proceedings of the IEEE/CVF Conference on Computer Vision and Pattern Recognition*, 2021, 2613-2622
- **DAI ; ANGELA ; CHANG ; ANGEL X. ; SAVVA ; MANOLIS et al.** Scannet: Richly-annotated 3d reconstructions of indoor scenes. *Proceedings of the IEEE conference on computer vision and pattern recognition*, 2017, 5828-5839
- **CHU ; RUIHANG ; YE ; XIAOQING ; LIU ; ZHENGZHE et al.** Twist: Two-way inter-label self-training for semi-supervised 3d instance segmentation. *Proceedings of the IEEE/CVF conference on computer vision and pattern recognition*, 2022, 1100-1109
- **ZHANG ; ZAIWEI ; GIRDHAR ; ROHIT ; JOULIN ; ARMAND et al.** Self-supervised pretraining of 3d features on any point-cloud. *Proceedings of the IEEE/CVF International Conference on Computer Vision*, 2021, 10252-10263
- **HOU ; JI ; GRAHAM ; BENJAMIN ; NIEßNER ; MATTHIAS et al.** Exploring data-efficient 3d scene understanding with contrastive scene contexts. *Proceedings of the IEEE/CVF Conference on Computer Vision and Pattern Recognition*, 2021, 15587-15597
- Weakly Supervised 3D Scene Segmentation with Region-Level Boundary Awareness and Instance Discrimination. **LIU ; KANGCHENG ; ZHAO ; YUZHI ; NIE ; QIANG et al.** 17th European Conference on Computer Vision, ECCV 2022. Springer, 2022, 37-55
- **HOULSBY ; NEIL ; HUSZAR ; FERENC ; GHAHRAMANI ; ZOUBIN et al.** Bayesian active learning for classification and preference learning. *arXiv preprint arXiv:1112.5745*, 2011
- Scanrefer: 3d object localization in rgb-d scans using natural language. **CHEN ; DAVE ZHENYU ; CHANG, ANGEL X. ; NIEßNER ; MATTHIAS**. European conference on computer vision. Springer International Publishing, 2020, 202-221
- **XIE ; QIZHE ; LUONG ; MINH-THANG ; HOVY ; EDUARD et al.** Self-training with noisy student improves imagenet classification. *Proceedings of the IEEE/CVF conference on computer vision and pattern recognition*, 2020, 10687-10698
- **UNAL ; OZAN ; SAKARIDIS ; CHRISTOS ; SAHA ; SUMAN et al.** Three Ways to Improve Verbo-visual Fusion for Dense 3D Visual Grounding. *arXiv preprint arXiv:2309.04561*, 2023

- **YANG ; YUWEI ; HAYAT ; MUNAWAR ; JIN ; ZHAO et al.** Geometry and uncertainty-aware 3d point cloud class-incremental semantic segmentation. *Proceedings of the IEEE/CVF Conference on Computer Vision and Pattern Recognition.*, 2023, 21759-21768
- **GAL ; YARIN ; GHAHRAMANI ; ZOUBIN**. Dropout as a bayesian approximation: Representing model uncertainty in deep learning. *international conference on machine learning. PMLR*, 2016, 1050-1059